# EUROPEAN PATENT APPLICATION

(11) **EP 4 459 555 A1**
(43) Date of publication of application: **06.11.2024**
(21) Application number: 21969936.0
(22) Date of filing: 27.12.2021
(51) Int. Cl.: G06T 9/40

(54) **DECODING DEVICE, ENCODING DEVICE, DECODING PROGRAM, ENCODING PROGRAM, DECODING METHOD, AND ENCODING METHOD**

(71) Applicant: Nippon Telegraph And Telephone Corporation, Chiyoda-ku Tokyo 100-8116 (JP)
(72) Inventor: SUGIMOTO Shiori, Musashino-shi, Tokyo 180-8585 (JP); BANDO Yukihiro, Musashino-shi, Tokyo 180-8585 (JP); KITAHARA Masaki, Musashino-shi, Tokyo 180-8585 (JP)
(74) Representative: Brevalex
(86) International application number: PCT/JP2021/048663
(87) International publication number: WO 2023/127052

(57) **Abstract**

A coding device includes: a position information coder configured to convert position information indicating a position of a point included in point cloud data into a tree structure, divide the tree structure in a depth direction to generate layer groups, divide at least one of the layer groups on a basis of the position information to generate subgroups, and code the subgroup to generate a position data unit corresponding to a part of the position information; a levels of detail structure generator configured to generate, for each attribute data unit corresponding to a part of attribute information indicating an attribute of a point included in the point cloud data, a detail level up to a layer overlapping with a parent attribute data unit in the depth direction, in order from a leaf side to a root side of the tree structure; and a prediction reference point determiner configured to determine, for each of the attribute data units, in order from the root side to the leaf side of the tree structure, for each point not subsampled when the detail level is generated, a prediction reference point from a layer same as a layer including the point not subsampled when the detail level is generated or a layer closer to the root side than the layer including the point not subsampled when the detail level is generated.

## Description

### Technical Field

The present invention relates to a decoding device, a coding device, a decoding program, a coding program, a decoding method and a coding method.

### Background Art

In recent years, applications for displaying a photograph, a map, an aerial photograph, or the like of a town on a display of a smartphone have been widely used. Further, since the point cloud data including a plurality of points having position information and attribute information acquired using light detection and ranging (LiDAR) or the like has an enormous amount of information, the point cloud data is often coded and stored. For coding the point cloud data, for example, geometry based point coding compression (G.pcc) disclosed in Non Patent Literature 1 is used.

### Citation List

### Non Patent Literature

Non Patent Literature 1: INTERNATIONAL ORGANIZATION FOR STANDARDIZATION ORGANISATION INTERNATIONALE DE NORMALISATION ISO/IEC JTC 1/SC 29/WG 7 MPEG 3D GRAPHICS CODING

In the technique described in Non Patent Literature 1, point cloud data is coded using an octree structure called octree for the presence or absence of a point included in the point cloud data for each unit called voxel. This octree structure has a hierarchical structure, and a lower hierarchy represents the presence or absence of more detailed points. Here, to decode attribute information of a predetermined point, it is necessary to decode all information referred to for decoding the attribute information. The information to be referred to is, for example, in a hierarchy higher than the predetermined point. That is, to decode the attribute information of the predetermined point, it is necessary to sequentially decode the attribute information from a higher layer such as decoding a one-level higher layer and coding another one-level higher layer, and partial access cannot be performed, resulting in an increase in the amount of operation. The same similarly applies to LoD created so as to correspond to the above-described Octree. That is, to decode the attribute information of the predetermined point, it is necessary that the attribute information of the hierarchy higher than the lower layer to which the point belongs be decoded.

### Summary of Invention

### Technical Problem

The present invention has been made in view of the above circumstances, and an object thereof is to provide a decoding device, a coding device, a decoding program, a coding program, a decoding method and a coding method for enabling partial access.

### Solution to Problem

One aspect of the present invention is a decoding device that decodes coded data obtained by coding point cloud data that is a set of points including attribute information, the point cloud data including the attribute information coded in a hierarchical structure, the decoding device including: a decoder configured to perform decoding for each decoder that is a set of pieces of attribute information of a plurality of points belonging to continuous hierarchies; and a predictor configured to predict attribute information of a point belonging to a highest hierarchy of a first decoder by referring to any one of pieces of attribute information of points belonging to a lowest layer of a second decoder including attribute information belonging to a higher hierarchy than the hierarchy to which the attribute information included in the first decoder belongs.

One aspect of the present invention is a decoding program that decodes coded data obtained by coding point cloud data that is a set of points including attribute information, the point cloud data including the attribute information coded in a hierarchical structure, the decoding program including: a decoding function to perform decoding for each decoder that is a set of pieces of attribute information of a plurality of points belonging to continuous hierarchies; and a prediction function to predict attribute information of a point belonging to a highest hierarchy of a first decoder by referring to any one of pieces of attribute information of points belonging to a lowest layer of a second decoder including attribute information belonging to a higher hierarchy than the hierarchy to which the attribute information included in the first decoder belongs.

One aspect of the present invention is a decoding method for decoding coded data obtained by coding point cloud data that is a set of points including attribute information, the point cloud data including the attribute information coded in a hierarchical structure, the decoding method including: performing decoding for each decoder that is a set of pieces of attribute information of a plurality of points belonging to continuous hierarchies; and predicting attribute information of a point belonging to a highest hierarchy of a first decoder by referring to any one of pieces of attribute information of points belonging to a lowest layer of a second decoder including attribute information belonging to a higher hierarchy than the hierarchy to which the attribute information included in the first decoder belongs.

One aspect of the present invention is a coding device includes: a position information coder configured to convert position information indicating a position of a point included in point cloud data into a tree structure, divide the tree structure in a depth direction to generate layer groups, divide at least one of the layer groups on a basis of the position information to generate subgroups, and code the subgroup to generate a position data unit corresponding to a part of the position information; a levels of detail structure generator configured to generate, for each attribute data unit corresponding to a part of attribute information indicating an attribute of a point included in the point cloud data, a detail level up to a layer overlapping with a parent attribute data unit in the depth direction in order from a leaf side to a root side of the tree structure; and a prediction reference point determiner configured to determine, for each of the attribute data units, in order from the root side to the leaf side of the tree structure, for each point not subsampled when the detail level is generated, a prediction reference point from a layer same as a layer including the point not subsampled when the detail level is generated or a layer closer to the root side than the layer including the point not subsampled when the detail level is generated.

One aspect of the present invention is a coding program for causing a computer to implement: a position information coding function to convert position information indicating a position of a point included in point cloud data into a tree structure, divide the tree structure in a depth direction to generate layer groups, divide at least one of the layer groups on a basis of the position information to generate subgroups, and code the subgroup to generate a position data unit corresponding to a part of the position information; a detail level generation function to generate, for each attribute data unit corresponding to a part of attribute information indicating an attribute of a point included in the point cloud data, a detail level up to a layer overlapping with a parent attribute data unit in the depth direction in order from a leaf side to a root side of the tree structure; and a prediction reference point determination function to determine, for each of the attribute data units, in order from the root side to the leaf side of the tree structure, for each point not subsampled when the detail level is generated, a prediction reference point from a layer same as a layer including the point not subsampled when the detail level is generated or a layer closer to the root side than the layer including the point not subsampled when the detail level is generated.

One aspect of the present invention is a coding method including: converting position information indicating a position of a point included in point cloud data into a tree structure, dividing the tree structure in a depth direction to generate layer groups, dividing at least one of the layer groups on a basis of the position information to generate subgroups, and coding the subgroup to generate a position data unit corresponding to a part of the position information; generating, for each attribute data unit corresponding to a part of attribute information indicating an attribute of a point included in the point cloud data, a detail level up to a layer overlapping with a parent attribute data unit in the depth direction in order from a leaf side to a root side of the tree structure; and determining, for each of the attribute data units, in order from the root side to the leaf side of the tree structure, for each point not subsampled when the detail level is generated, a prediction reference point from a layer same as a layer including the point not subsampled when the detail level is generated or a layer closer to the root side than the layer including the point not subsampled when the detail level is generated.

### Advantageous Effects of Invention

According to the present invention, partial access can be made possible.

### Brief Description of Drawings

Fig. 1 is a diagram illustrating an example of a hardware configuration of a coding device according to a first embodiment.
Fig. 2 is a diagram illustrating an example of a software configuration of the coding device according to the first embodiment.
Fig. 3 is a diagram illustrating an example of layer groups and subgroups according to the first embodiment.
Fig. 4 is a diagram for describing an example of processing in which the coding device according to the first embodiment determines a prediction reference point.
Fig. 5 is a diagram for describing an example of processing in which the coding device according to the first embodiment determines a prediction reference point.
Fig. 6 is a flowchart illustrating an example of processing executed by the coding device according to the first embodiment.
Fig. 7 is a diagram illustrating an example of a hardware configuration of a coding device according to a second embodiment.
Fig. 8 is a diagram illustrating an example of a software configuration of the coding device according to the second embodiment.
Fig. 9 is a flowchart illustrating an example of processing executed by the coding device according to the second embodiment.

### Description of Embodiments

### [First Embodiment]

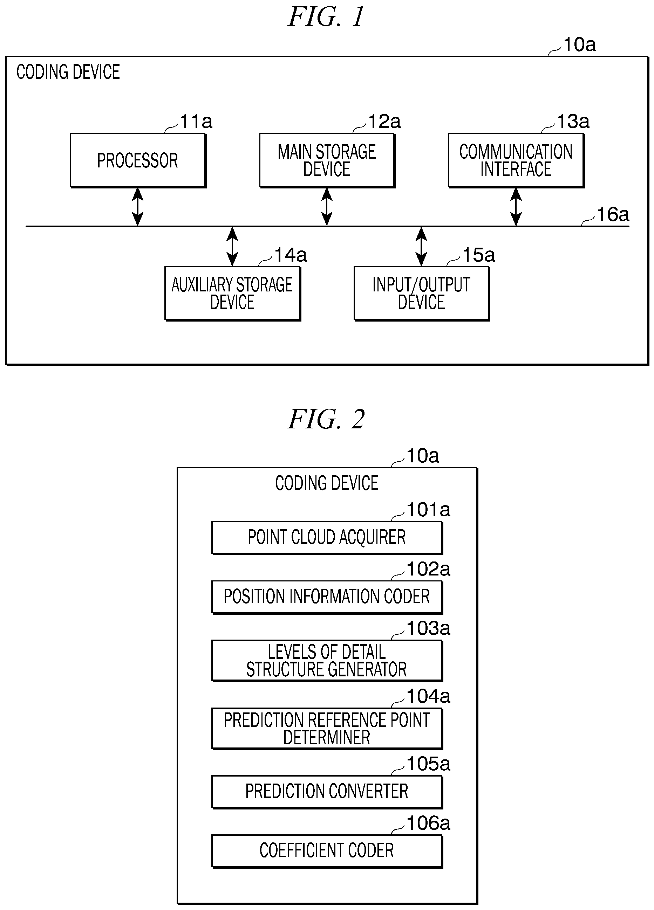

A coding device, a coding program, and a coding method according to a first embodiment will be described with reference to Figs. 1 to 6.

Fig. 1 is a diagram illustrating an example of a hardware configuration of a coding device according to the first embodiment. As illustrated in Fig. 1, a coding device 10a includes a processor 11a, a main storage device 12a, a communication interface 13a, an auxiliary storage device 14a, an input/output device 15a, and a bus 16a.

The processor 11a is, for example, a central processing unit (CPU), and reads and executes a coding program to implement each function of the coding device 10a. Further, the processor 11a may read and execute a program other than the coding program to implement functions necessary for implementing the functions of the coding device 10a.

The main storage device 12a is, for example, a random access memory (RAM), and stores in advance the coding program and other programs to be read and executed by the processor 11a.

The communication interface 13a is an interface circuit for executing communication with other devices via a network.
Further, the network is, for example, a wide area network (WAN), a local area network (LAN), the Internet, or an intranet. An example of the other devices referred to here includes LIDAR.

The auxiliary storage device 14a is, for example, a hard disk drive (HDD), a solid state drive (SSD), a flash memory, or a read only memory (ROM).

The input/output device 15a is, for example, an input/output port. For example, an input device and an output device are connected to the input/output device 15a. The input device is, for example, a display, a touch panel display, a mouse, or a keyboard, and is used to operate the coding device 10a and input data to the coding device 10a. The output device is, for example, a display, a touch panel display, or a speaker, and is used by the coding device 10a to present information to a user.

The bus 16a connects the processor 11a, the main storage device 12a, the communication interface 13a, the auxiliary storage device 14a, and the input/output device 15a so as to be able to transmit and receive data to and from each other.

Fig. 2 is a diagram illustrating an example of a software configuration of the coding device according to the first embodiment. As illustrated in Fig. 2, the coding device 10a includes a point cloud acquirer 101a, a position information coder 102a, a levels of detail structure generator 103a, a prediction reference point determiner 104a, a prediction converter 105a, and a coefficient coder 106a. The point cloud acquirer 101a, the position information coder 102a, the levels of detail structure generator 103a, the prediction reference point determiner 104a, the prediction converter 105a, and the coefficient coder 106a are all implemented by the processor 11a reading and executing the coding program stored in the main storage device 12a.

The point cloud acquirer 101a acquires point cloud data. For example, the point cloud acquirer 101a acquires the point cloud data obtained by scanning a three-dimensional space by the LIDAR. Alternatively, the point cloud acquirer 101a acquires the point cloud data obtained by capturing a three-dimensional space with a camera.

The position information coder 102a converts position information indicating a position of a point included in the point cloud data into a tree structure. The position information is, for example, information indicating the position of the point in the three-dimensional space. The tree structure referred to herein is, for example, an octree.

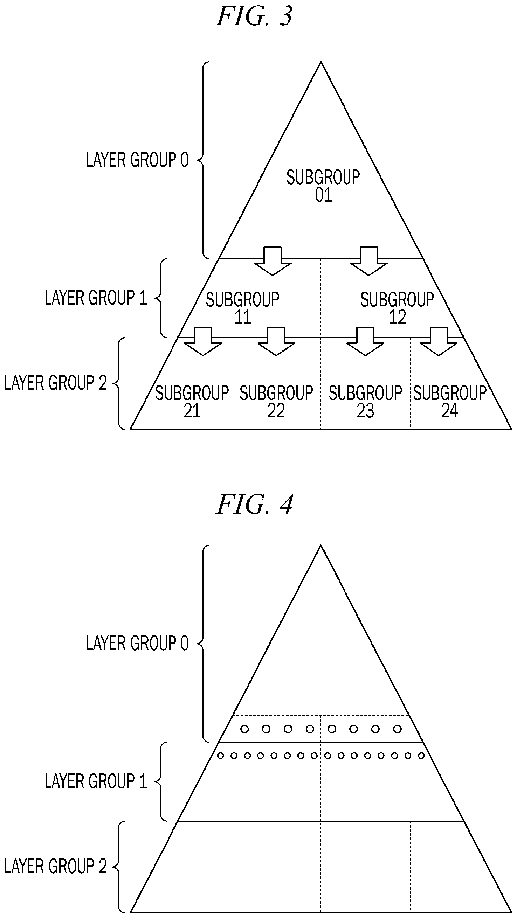

Next, the position information coder 102a divides the tree structure in a depth direction to generate a layer group. The layer group includes at least one layer having the tree structure. Fig. 3 is a diagram illustrating an example of layer groups and subgroups according to the first embodiment. For example, as illustrated in Fig. 3, the position information coder 102a divides the octree in the depth direction to generate a layer group 0, a layer group 1, and a layer group 2.

An outline of the present invention will be described. As described above, to perform partial access, that is, to decode an attribute corresponding to a desired point with a small amount of operation, a configuration to divide a layer group into one or more subgroups as described in Fig. 3, and to perform coding or decoding in units of divided subgroups is adopted. Except for the exception to be described below, it is possible to reduce dependence on other subgroups by adopting a configuration to perform prediction with reference to an attribute in a target subgroup. Further, a configuration in which the attribute of the point of the highest hierarchy of the target subgroup is predicted with reference to the attribute of a higher hierarchy, for example, the point of the lowest hierarchy of an adjacent one-level higher subgroup. By adopting such a configuration, it is possible to predict the attribute of the target subgroup as long as there is the attribute of the lowest layer of the higher and adjacent subgroup.

For example, in a case where a subgroup 21 of Fig. 3 is to be decoded, it is sufficient that there is the attribute of the lowest layer of the subgroup 11, and it is sufficient that there is the lowest layer of the subgroup 01 in order to obtain the attribute of the point of the lowest layer of the subgroup 11. That is, only the subgroup 11 and the subgroup 01 need to be decoded in order to decode the subgroup 21, and the amount of operation can be reduced as compared with the technique described in Non Patent Literature 1.

Further, the layer group closest to a root side can be independently coded and decoded. Meanwhile, the layer groups other than the layer group closest to the root side can be coded using a result of coding the layer group immediately above themselves. Further, the layer groups other than the layer group closest to the root side can be decoded using a result of decoding the layer group immediately above themselves. Note that the point cloud obtained by decoding the layer groups from the layer group closest to the root side to the layer groups other than the layer group closest to a leaf side is the point cloud obtained by quantizing the point cloud obtained by decoding the entire tree structure.

Next, the position information coder 102a divides at least one of the layer groups on the basis of position information to generate subgroups. For example, the position information coder 102a sets a set of points having an X coordinate value exceeding a predetermined threshold among the points included in the point cloud data as one subgroup, and sets a set of points having an X coordinate value equal to or less than the predetermined threshold among these points as another subgroup.

For example, as illustrated in Fig. 3, the position information coder 102a divides the layer group 1 to generate the subgroup 11 and a subgroup 12. Further, for example, as illustrated in Fig. 3, the position information coder 102a divides the layer group 2 to generate the subgroup 21, a subgroup 22, a subgroup 23, and a subgroup 24.

Then, the position information coder 102a codes the subgroup to generate a position data unit corresponding to a part of the position information. For example, the position information coder 102a codes one subgroup to generate one position data unit. Alternatively, the position information coder 102a codes at least two subgroups to generate one position data unit.

The position data unit includes a header and a body. The header is a part of a syntax element and includes data necessary for processing of decoding the position data unit. Examples of such data include data for specifying a subgroup and data for specifying a parent subgroup of the subgroup. Note that these pieces of data may be included in a syntax table different from the header. Further, the body includes data related to the position information and data related to the attribute information. The attribute information referred to here is information indicating intensity, color, and the like of reflected light of laser light emitted by the LIDAR, and is associated with a point included in the point cloud data.

Further, one or more position data units are arranged to form position information code data. The position information code data can be processed to extract a specific position data unit using the data or the like included in the header.

The levels of detail structure generator 103a generates, for each attribute data unit, levels of detail for a point decoded from the corresponding position data unit. Levels of detail structure include a detail level list of N layers and a refinement point list of the N layers. Hereinafter, a higher side of a layer is referred to as a root side, and a lower side of the layer is referred to as a leaf side. The detail level list is a list of points included in each level. The detail level list closest to the leaf side includes all the points corresponding to the attribute data unit. The refinement point list is a list of points not included in the detail level list on a one-level higher root side, of the points included in the detail level list of a certain level. The refinement point list closest to the leaf side is empty. The number N of levels of detail structure may be independent of the number of layers, which is the depth of the tree structure representing the position information. Note that, in the case of layers M of the tree structure, the quantized points corresponding to the layer M can be decoded with the attribute information by decoding up to the layer M level N. In the present embodiment, it is assumed that the number of points represented by the layer closest to the leaf side of the tree structure and the number of points included in the detail level list closest to the leaf side of the levels of detail structure are the same for the position data unit and the attribute data unit in the correspondence relationship. The levels of detail structure generator 103a generates the detail level list up to a level overlapping a parent attribute data unit in the depth direction in order from the leaf side toward the root side. The attribute data unit corresponds to a part of the attribute information indicating the attributes of the points included in the point cloud data. The parent attribute data unit is a parent attribute data unit of the attribute data unit for which the detail level is generated.

For example, the levels of detail structure generator 103a generates the detail level list up to a level overlapping the parent attribute data unit by one level in the depth direction in order from the leaf side toward the root side for each attribute data unit.

Specifically, the levels of detail structure generator 103a acquires the point cloud obtained by decoding the position data unit closest to the root side. These points correspond to the finest level of the levels of detail structure. Then, the levels of detail structure generator 103a executes subsampling in order from this level toward the root side of the attribute data unit for which the detail level is generated, and generates the detail level of the attribute data unit. Any subsampling method may be used. For example, block division may be performed according to a level, and a point closest to a center may be selected for each block. In this sampling method, in a case where the block division is performed by octree division, the detail level of the attribute data unit and the layer of the tree structure of the position data unit have a one-to-one correspondence, and the number of points included in the detail level list of each level coincides with the number of nodes at the corresponding depth of the tree structure.

Further, the levels of detail structure generator 103a acquires the point cloud obtained by decoding the position data unit neither closest to the root side nor to the leaf side. Then, the levels of detail structure generator 103a executes subsampling for this point cloud in order from the most leaf side toward the root side, and generates the detail level of the attribute data unit up to a level overlapping with the parent attribute data unit. For example, in the case where the above-described block division method is used as the subsampling method, the levels of detail structure of a certain parent attribute data unit and the detail level of a certain child attribute data unit overlapping each other means that a block size corresponding to the level closest to the leaf side of the parent attribute data unit is the same as a block size corresponding to the level closest to the root side of the child attribute data unit. In this case, a node corresponding to the point included in the detail level list closest to the root side of the child attribute data unit has a one-to-one parent-child relationship with a part of a leaf node of the tree structure corresponding to the point included in the detail level list closest to the leaf side of the parent attribute data unit.

The levels of detail structure generator 103a executes similar processing and generates the detail levels for the attribute data units corresponding to all the position data units.

The prediction reference point determiner 104a determines, for each attribute data unit, for each point included in the refinement point list of each level, a prediction reference point from among the points included in the detail level list of a level closer to the root side than this each level or points included in the detail level list of a level closest to the leaf side of the parent attribute data unit.

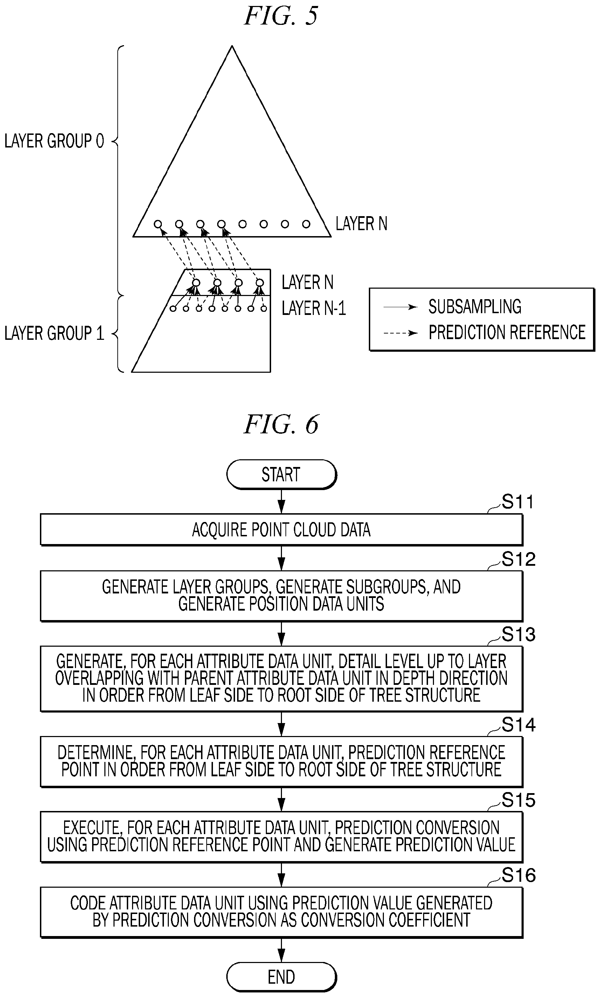

Figs. 4 and 5 are diagrams for describing an example of processing in which the coding device according to the first embodiment determines the prediction reference point. Fig. 4 illustrates the points at the level closest to the root side of the subgroup 11 illustrated in Fig. 3 and the points at the level closest to the root side of the subgroup 12 illustrated in Fig. 3 by white circles. Arrows drawn by dotted lines in Fig. 5 represent prediction references. Arrows drawn by solid lines in Fig. 5 represent subsampling. That is, the points connected with each other by the solid line represent the same point. For example, as illustrated in Fig. 5, in the case of determining the prediction reference point for the attribute data unit of the subgroup 11 illustrated in Fig. 3, the prediction reference point determiner 104a can select the prediction reference point from the detail level list closest to the leaf side of the attribute data unit of the subgroup 01 that is the parent of the subgroup 11.

The prediction reference point determiner 104a selects the prediction reference point from a reference option list for each of points included in the refinement point lists from the level closer to the leaf side than the level closest to the root side to the level closest to the leaf side. As the reference option list, for example, the detail level list at the level closer to the root side than each level is used, for example. An example of a method of selecting the prediction reference point includes a neighborhood search based on a spatial distance to a prediction target point.

Further, for the attribute data units other than the attribute data unit closest to the root side, the prediction reference point determiner 104a may use the detail level list of the level closest to the leaf side of the parent attribute data unit as the reference option list at all the levels. As the method of selecting the prediction reference point, a method same as the above-described method may be used or another method can also be used. For example, the node of the tree structure corresponding to the prediction target point is assumed to be in a parent-child relationship or in a relationship between an ancestor and a descendant with the node of the tree structure corresponding to any point in the reference option list, and a point in the relationship is selected as the prediction reference point. As a specific search method, the search may be performed using the tree structure used at the time of coding the position data unit, or matching using a Morton code may be performed. For example, in a case where three-dimensional position coordinates of a certain node of the tree structure and three-dimensional position coordinates of a node corresponding to an ancestor of the certain node are expressed by octree Morton codes, when the respective codes are shifted to the right by the number of bits corresponding to the depth of the ancestor node, the shifted codes coincide with each other. By using this method, the point corresponding to the parent of the prediction target point can be selected at high speed from the reference option list. For example, a high-speed search can be performed by creating a table using the shifted Morton codes and hash values generated therefrom as keys for all the points in the reference option list.

In a case where the reference option list is created such that the prediction target point and the prediction reference point have a complete one-to-one relationship between an ancestor and a descendant, the positions of the points having the correspondence relationship in the lists coincide with each other by sorting the respective lists using the Morton codes corresponding to the position coordinates of the points. Therefore, the prediction reference point may be determined using this method. In the case of generating the levels of detail structure by performing the subsampling by block division as described above, this relationship holds when a list of points within a range of a three-dimensional space occupied by a subgroup corresponding to a child attribute data block among the points included in the detail level list closest to the leaf side of a parent attribute data block is used as the reference candidate list.

Further, the prediction reference point determiner 104a may use, as the reference option list, a detail level list of an attribute data unit that belongs to the same layer group as the attribute data unit for which the prediction reference point is to be determined, has already been coded by the position information coder 102a, and belongs to a subgroup different from the attribute data unit.

Further, in this case, the prediction reference point determiner 104a may use, as the reference option list, a detail level list at the same level as the attribute data unit for which the prediction reference point is to be determined, among the detail level lists of the attribute data units that have already been coded by the position information coder 102a, and belong to subgroups different from the attribute data unit.

Alternatively, in this case, the prediction reference point determiner 104a may use, as the reference option list, the detail level list closest to the leaf side, among the detail level lists of the attribute data units that have already been coded by the position information coder 102a and belong to subgroups different from the attribute data unit.

Further, after determining the prediction reference points, the prediction reference point determiner 104a lists these prediction reference points to generate the reference option list.

The prediction converter 105a executes prediction conversion using the prediction reference point for each attribute data unit and generates a prediction value. The prediction value is a value related to the attribute information of the point included in the point cloud data.

Further, the prediction conversion method referred to here is not particularly limited. For example, the prediction converter 105a may employ lifting transform as the prediction conversion method. In this case, the prediction converter 105a generates the prediction value of the attribute information of the attribute data unit by calculating a weighted sum of the points included in the prediction reference list in order from the level closest to the leaf side among the detail levels of the attribute data unit for which the prediction value is to be generated, and executes the prediction conversion by updating the attribute information of each point using the prediction value. Further, these weights are determined on the basis of, for example, the distance between each point and the prediction reference point.

The coefficient coder 106a codes the attribute data unit by executing coefficient coding using the prediction value generated by the prediction conversion as a conversion coefficient. Furthermore, the coefficient coding method referred to here is not particularly limited.

Next, an example of processing executed by the coding device 10a will be described with reference to Fig. 6. Fig. 6 is a flowchart illustrating an example of processing executed by the coding device according to the first embodiment.

In step S11, the point cloud acquirer 101a acquires the point cloud data.

In step S12, the position information coder 102a generates the layer group, generates the subgroups, and generates the position data units.

In step S13, the levels of detail structure generator 103a generates, for each attribute data unit, the detail level up to a layer overlapping with the parent attribute data unit in the depth direction in order from the leaf side to the root side of the tree structure.

In step S14, the prediction reference point determiner 104a determines, for each attribute data unit, the prediction reference point in order from the leaf side to the root side of the tree structure.

In step S15, the prediction converter 105a executes, for each attribute data unit, the prediction conversion using the prediction reference point and generates the prediction value.

In step S16, the coefficient coder 106a codes the attribute data unit using the prediction value generated by the prediction conversion as the conversion coefficient.

The coding device 10a according to the first embodiment has been described above. The coding device 10a includes the position information coder 102a, the levels of detail structure generator 103a, and the prediction reference point determiner 104a.

The position information coder 102a converts the position information indicating the positions of the points included in the point cloud data into the tree structure, divides the tree structure in the depth direction to generate the layer groups, divides at least one of the layer groups on the basis of the position information to generate subgroups, and codes the subgroup to generate the position data unit corresponding to a part of the position information.

The levels of detail structure generator 103a generates, for each attribute data unit, the detail level up to a level overlapping with the parent attribute data unit in the depth direction in order from the leaf side to the root side of the tree structure.

The prediction reference point determiner 104a determines, for each attribute data unit, for each of points that have not been subsampled at the time of generating the detail level, the prediction reference point from the same layer as the layer including these points or from a layer closer to the root side than the layer including these points, in order from the root side to the leaf side of the tree structure.

Accordingly, the coding device 10a can enable partial access.

Further, the coding device 10a determines the prediction reference point with reference to the detail level list of the parent attribute data unit in all the layers. As a result, the coding device 10a can execute the prediction conversion of each level in parallel.

Further, the coding device 10a determines the prediction reference point by referring to the detail level of the attribute data unit belonging to the same layer group as the attribute data unit for which the prediction reference point is to be determined, has already been coded by the position information coder 102a, and belonging to the subgroup different from the attribute data unit for which the prediction reference point is to be determined. As a result, the coding device 10a can more accurately predict the attribute information with reference to data of another subgroup when predicting the attribute information.

### [Second Embodiment]

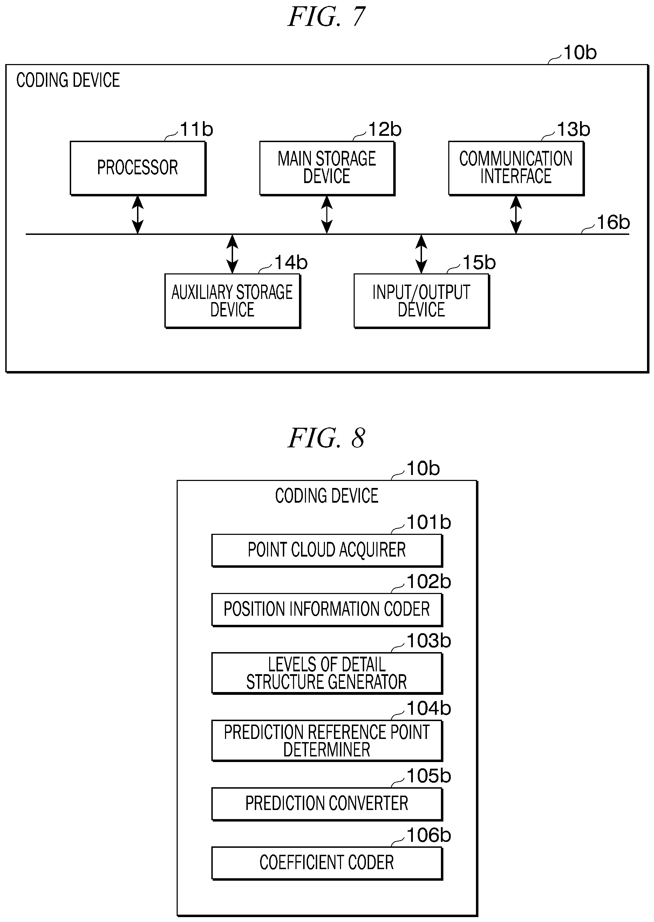

A coding device, a coding program, and a coding method according to a second embodiment will be described with reference to Figs. 7 to 9. The coding device according to the second embodiment is different from the coding device according to the first embodiment in processing of generating a detail level. Therefore, in the description of the second embodiment, portions different from those of the first embodiment will be mainly described, and description of the same contents as those of the first embodiment will be appropriately omitted.

Fig. 7 is a diagram illustrating an example of a hardware configuration of the coding device according to the second embodiment. As illustrated in Fig. 7, a coding device 10b includes a processor 11b, a main storage device 12b, a communication interface 13b, an auxiliary storage device 14b, an input/output device 15b, and a bus 16b.

The processor 11b is, for example, a CPU, and reads and executes a coding program to implement each function of the coding device 10b. Further, the processor 11b may read and execute a program other than the coding program to implement functions necessary for implementing the functions of the coding device 10b.

The main storage device 12b is, for example, a RAM, and stores in advance the coding program and other programs to be read and executed by the processor 11b.

The communication interface 13b is an interface circuit for executing communication with other devices via a network. An example of the other devices referred to here includes LIDAR.

The auxiliary storage device 14b is, for example, a hard disk drive, a solid state drive, a flash memory, or a ROM.

The input/output device 15b is, for example, an input/output port. For example, an input device and an output device are connected to the input/output device 15b.

The bus 16b connects the processor 11b, the main storage device 12b, the communication interface 13b, the auxiliary storage device 14b, and the input/output device 15b so as to be able to transmit and receive data to and from each other.

Fig. 8 is a diagram illustrating an example of a software configuration of the coding device according to the second embodiment. As illustrated in Fig. 8, the coding device 10b includes a point cloud acquirer 101b, a position information coder 102b, a levels of detail structure generator 103b, a prediction reference point determiner 104b, a prediction converter 105b, and a coefficient coder 106b. The point cloud acquirer 101b, the position information coder 102b, the levels of detail structure generator 103b, the prediction reference point determiner 104b, the prediction converter 105b, and the coefficient coder 106b are all implemented by the processor 11b reading and executing the coding program stored in the main storage device 12b.

The point cloud acquirer 101b acquires point cloud data.

The position information coder 102b converts position information indicating positions of points included in the point cloud data into a tree structure. The tree structure referred to herein is, for example, an octree. Next, the position information coder 102b divides the tree structure in a depth direction to generate layer groups, and divides at least one of the layer groups on the basis of the position information to generate subgroups. Then, the position information coder 102b codes the subgroup to generate a position data unit corresponding to a part of the position information.

The levels of detail structure generator 103b generates, for each attribute data unit, a detail level list up to a level not overlapping with a parent attribute data unit in the depth direction in order from a leaf side to a root side. The levels of detail structure generator 103b executes similar processing and generates the detail level lists for the attribute data units corresponding to all the position data units.

The prediction reference point determiner 104b determines, for each attribute data unit, for points in a refinement point list of each level, a prediction reference point from the detail level list at the same level as the level including these points or at a level closer to the root side than the level including these points.

The prediction reference point determiner 104b determines, for the attribute data unit closest to the root side, the prediction reference point for each of the refinement points from the level one level lower than the level closest to the root side to the level closest to the leaf side. Further, the prediction reference point determiner 104b determines, for the attribute data units other than the attribute data unit closest to the root side, the prediction reference point for each of the refinement points from the level closest to the root side to the level closest to the leaf side.

Further, for the attribute data units other than the attribute data unit closest to the root side, the prediction reference point determiner 104b may use the detail level list of the level closest to the leaf side of the parent attribute data unit as a reference option list at all the levels.

Further, the prediction reference point determiner 104b may determine the prediction reference point by referring to a detail level list of an attribute data unit that belongs to the same layer group as the attribute data unit for which the prediction reference point is to be determined, has already been coded by the position information coder 102b, and belongs to a subgroup different from the attribute data unit.

Furthermore, in this case, the prediction reference point determiner 104b may refer to a detail level list at the same level as the attribute data unit for which the prediction reference point is to be determined, among the levels of the attribute data units that have already been coded by the position information coder 102b, and belong to subgroups different from the attribute data unit.

Alternatively, in this case, the prediction reference point determiner 104b may refer to the detail level list of a finest layer among the levels of the attribute data units that have already been coded by the position information coder 102b and belong to subgroups different from the attribute data unit.

Further, after determining the prediction reference points, the prediction reference point determiner 104b lists these prediction reference points to generate the reference option list.

The prediction converter 105b executes prediction conversion using the prediction reference point for each attribute data unit and generates a prediction value. The prediction conversion method referred to here is not particularly limited.

The coefficient coder 106b codes the attribute data unit by executing coefficient coding using the prediction value generated by the prediction conversion as a conversion coefficient. The coefficient coding method referred to here is not particularly limited.

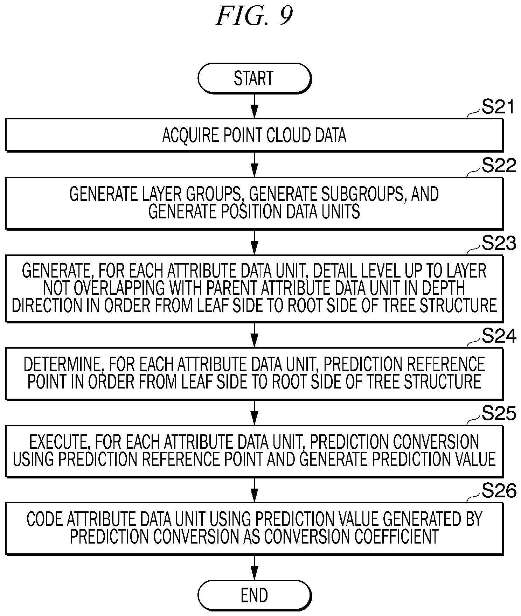

Next, an example of processing executed by the coding device 10b will be described with reference to Fig. 9. Fig. 9 is a flowchart illustrating an example of processing executed by the coding device according to the second embodiment.

In step S21, the point cloud acquirer 101b acquires the point cloud data.

In step S22, the position information coder 102b generates the layer group, generates the subgroups, and generates the position data units.

In step S23, the levels of detail structure generator 103b generates, for each attribute data unit, the detail level up to a layer not overlapping with the parent attribute data unit in the depth direction in order from the leaf side to the root side of the tree structure.

In step S24, the prediction reference point determiner 104b determines, for each attribute data unit, the prediction reference point in order from the leaf side to the root side of the tree structure.

In step S25, the prediction converter 105b executes, for each attribute data unit, the prediction conversion using the prediction reference point and generates the prediction value.

In step S26, the coefficient coder 106b codes the attribute data unit using the prediction value generated by the prediction conversion as the conversion coefficient.

The coding device 10b according to the second embodiment has been described above. The coding device 10b includes a position information coder 102b, a levels of detail structure generator 103b, and a prediction reference point determiner 104b.

The position information coder 102b converts the position information indicating the positions of the points included in the point cloud data into the tree structure, divides the tree structure in the depth direction to generate the layer groups, divides at least one of the layer groups on the basis of the position information to generate subgroups, and codes the subgroup to generate the position data unit corresponding to a part of the position information.

The levels of detail structure generator 103b generates, for each attribute data unit, the detail level up to a layer not overlapping with the parent attribute data unit in the depth direction in order from the leaf side to the root side of the tree structure.

The prediction reference point determiner 104b determines, for each attribute data unit, for each of points that have not been subsampled at the time of generating the detail level, the prediction reference point from the same layer as the layer including these points or from a layer closer to the root side than the layer including these points, in order from the root side to the leaf side of the tree structure.

Accordingly, the coding device 10b can enable partial access. Note that, in the data unit other than the attribute data unit closest to the root side, the detail level list may not be generated at all, and the prediction reference point may be selected from the detail level list of the parent attribute data unit for all the points included in the data unit and coding may be performed.

Next, a decoding device, a decoding program, and a decoding method for decoding the point cloud coded by the coding device 10a or the coding device 10b will be described.

The decoding device is a device that decodes coded data obtained by coding point cloud data that is a set of points including attribute information, and executes reverse processing to the coding device 10a or the coding device 10b. The decoding device includes a decoder and a predictor. The point cloud data has attribute information coded in a hierarchical structure. The decoder performs decoding for each decoder that is a set of pieces of attribute information of a plurality of points belonging to continuous hierarchies. The predictor perform prediction for the attribute information of a point belonging to the highest hierarchy of a first decoder by referring to any one piece of attribute information of points belonging to the lowest layer of a second decoder including attribute information belonging to a higher hierarchy than the hierarchy to which the attribute information included in the first decoder belongs. Further, the highest hierarchy of the first decoder is a hierarchy one layer below the lowest layer of the second decoder. Further, the first decoder includes at least one or more decoders of the same hierarchy.

Note that at least a part of the functions of the coding device 10a and at least a part of the functions of the coding device 10b may be implemented by hardware including circuitry such as a large scale integration (LSI), an application specific integrated circuit (ASIC), a field-programmable gate array (FPGA), and a graphics processing unit (GPU). Alternatively, at least a part of the functions of the coding device 10a and at least a part of the functions of the coding device 10b may be implemented by cooperation of software and hardware. In addition, these pieces of hardware may be integrated into one, or may be divided into a plurality of pieces.

The embodiments of the present invention have been described above with reference to the drawings. However, the coding device, the coding program, and the coding method are not limited to the above-described embodiments, and at least one of various modifications, substitutions, combinations, or design changes can be added without departing from the gist of the present invention.

In addition, the effects of the embodiments of the present invention described above are the effects described as an example. Therefore, the embodiments of the present invention can exhibit other effects that can be recognized by those skilled in the art from the description of the above-described embodiments in addition to the above-described effects.

### Reference Signs List

- 10a, 10b: Coding device
- 11a, 11b: Processor
- 12a, 12b: Main storage device
- 13a, 13b: Communication interface
- 14a, 14b: Auxiliary storage device
- 15a, 15b: Input/output device
- 16a, 16b: Bus
- 101a, 101b: Point cloud acquirer
- 102a, 102b: Position information coder
- 103a, 103b: Levels of detail structure generator
- 104a, 104b: Prediction reference point determiner
- 105a, 105b: Prediction converter
- 106a, 106b: Coefficient coder

## Claims

1. A decoding device that decodes coded data obtained by coding point cloud data that is a set of points including attribute information,
the point cloud data including the attribute information coded in a hierarchical structure,
the decoding device comprising:
a decoder configured to perform decoding for each decoder that is a set of pieces of attribute information of a plurality of points belonging to continuous hierarchies; and
a predictor configured to predict attribute information of a point belonging to a highest hierarchy of a first decoder by referring to any one of pieces of attribute information of points belonging to a lowest layer of a second decoder including attribute information belonging to a higher hierarchy than the hierarchy to which the attribute information included in the first decoder belongs.

2. The decoding device according to claim 1, wherein
the highest hierarchy of the first decoder is a hierarchy one layer below the lowest layer of the second decoder.

3. The decoding device according to claim 2, wherein
the first decoder includes at least one or more decoders of the same hierarchy.

4. A decoding program that decodes coded data obtained by coding point cloud data that is a set of points including attribute information,
the point cloud data including the attribute information coded in a hierarchical structure,
the decoding program comprising:
a decoding function to perform decoding for each decoder that is a set of pieces of attribute information of a plurality of points belonging to continuous hierarchies; and
a prediction function to predict attribute information of a point belonging to a highest hierarchy of a first decoder by referring to any one of pieces of attribute information of points belonging to a lowest layer of a second decoder including attribute information belonging to a higher hierarchy than the hierarchy to which the attribute information included in the first decoder belongs.

5. A decoding method for decoding coded data obtained by coding point cloud data that is a set of points including attribute information,
the point cloud data including the attribute information coded in a hierarchical structure,
the decoding method comprising:
performing decoding for each decoder that is a set of pieces of attribute information of a plurality of points belonging to continuous hierarchies; and
predicting attribute information of a point belonging to a highest hierarchy of a first decoder by referring to any one of pieces of attribute information of points belonging to a lowest layer of a second decoder including attribute information belonging to a higher hierarchy than the hierarchy to which the attribute information included in the first decoder belongs.

6. A coding device comprising:
a position information coder configured to convert position information indicating a position of a point included in point cloud data into a tree structure, divide the tree structure in a depth direction to generate layer groups, divide at least one of the layer groups on a basis of the position information to generate subgroups, and code the subgroup to generate a position data unit corresponding to a part of the position information;
a levels of detail structure generator configured to generate, for each attribute data unit corresponding to a part of attribute information indicating an attribute of a point included in the point cloud data, a detail level up to a layer overlapping with a parent attribute data unit in the depth direction in order from a leaf side to a root side of the tree structure; and
a prediction reference point determiner configured to determine, for each of the attribute data units, in order from the root side to the leaf side of the tree structure, for each point not subsampled when the detail level is generated, a prediction reference point from a layer same as a layer including the point not subsampled when the detail level is generated or a layer closer to the root side than the layer including the point not subsampled when the detail level is generated.

7. A coding program for causing a computer to implement:
a position information coding function to convert position information indicating a position of a point included in point cloud data into a tree structure, divide the tree structure in a depth direction to generate layer groups, divide at least one of the layer groups on a basis of the position information to generate subgroups, and code the subgroup to generate a position data unit corresponding to a part of the position information;
a detail level generation function to generate, for each attribute data unit corresponding to a part of attribute information indicating an attribute of a point included in the point cloud data, a detail level up to a layer overlapping with a parent attribute data unit in the depth direction in order from a leaf side to a root side of the tree structure; and
a prediction reference point determination function to determine, for each of the attribute data units, in order from the root side to the leaf side of the tree structure, for each point not subsampled when the detail level is generated, a prediction reference point from a layer same as a layer including the point not subsampled when the detail level is generated or a layer closer to the root side than the layer including the point not subsampled when the detail level is generated.

8. A coding method comprising:
converting position information indicating a position of a point included in point cloud data into a tree structure, dividing the tree structure in a depth direction to generate layer groups, dividing at least one of the layer groups on a basis of the position information to generate subgroups, and coding the subgroup to generate a position data unit corresponding to a part of the position information;
generating, for each attribute data unit corresponding to a part of attribute information indicating an attribute of a point included in the point cloud data, a detail level up to a layer overlapping with a parent attribute data unit in the depth direction in order from a leaf side to a root side of the tree structure; and
determining, for each of the attribute data units, in order from the root side to the leaf side of the tree structure, for each point not subsampled when the detail level is generated, a prediction reference point from a layer same as a layer including the point not subsampled when the detail level is generated or a layer closer to the root side than the layer including the point not subsampled when the detail level is generated.
